(19) Europäisches Patentamt
European Patent Office
Office européen des brevets

(11) **EP 2 125 988 B1**

(12) **FASCICULE DE BREVET EUROPEEN**

(45) Date de publication et mention
de la délivrance du brevet:
**26.06.2013 Bulletin 2013/26**

(51) Int Cl.:
***C09K 8/52*** *(2006.01)*     ***E21B 37/06*** *(2006.01)*
***C09K 8/60*** *(2006.01)*     ***C09K 8/36*** *(2006.01)*

(21) Numéro de dépôt: **08775578.1**

(22) Date de dépôt: **19.02.2008**

(86) Numéro de dépôt international:
**PCT/FR2008/000222**

(87) Numéro de publication internationale:
**WO 2008/129160 (30.10.2008 Gazette 2008/44)**

(54) **FLUIDE DE TRAITEMENT POUR PUITS FORÉS AVEC DES BOUES A BASE D'HUILE, SOUS FORME D'UNE ÉMULSION DE TYPE EAU DANS HUILE À EFFET RETARDÉ**

PROZESSFLUID FÜR ANHAND VON SCHLÄMMEN AUF ÖLBASIS GEBOHRTE BOHRLÖCHER IN FORM EINER WASSER-IN-ÖL-EMULSION MIT VERZÖGERTER WIRKUNG

PROCESSING FLUID FOR WELLS BORED WITH OIL-BASED MUDS IN THE FORM OF A DELAYED EFFECT WATER-IN-OIL EMULSION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.02.2007 FR 0701251**

(43) Date de publication de la demande:
**02.12.2009 Bulletin 2009/49**

(73) Titulaire: **IFP Energies nouvelles**
**92852 Rueil-Malmaison Cedex (FR)**

(72) Inventeurs:
- **DALMAZZONE, Christine**
  **78220 Viroflay (FR)**
- **AUDIBERT-HAYET, Annie**
  **F-78290 Croissy-sur-Seine (FR)**

(56) Documents cités:
**EP-A- 1 190 754**     **WO-A-01/42387**
**US-A1- 2006 223 714**

**Description**

*Domaine technique*

L'invention concerne le traitement de puits, en particulier de puits forés par des fluides à base d'huile.

Elle concerne plus particulièrement une formulation non endommageante, destinée au nettoyage, si possible en une seule étape, de puits injecteurs d'eau, sous forme d'une émulsion de type eau dans huile à effet retardé.

*Art antérieur*

Une formation rocheuse, par exemple un gisement pétrolier, est dite endommagée lorsqu'un puits foré dans cette formation se révèle moins productif que ne le prévoyaient les analyses des tests de production effectués dans ce puits. Les mécanismes d'endommagement de la formation dépendent du type de réactions produites entre le ou les fluides utilisés pour forer le puits, les fluides contenus dans la formation et la nature de la roche, dans les conditions de travail (pression et température de la formation). L'altération de la formation productrice proche du puits est due aux interactions néfastes entre les fluides de formation et les fluides étrangers introduits. Si les fluides de puits s'avèrent responsables de l'endommagement, un traitement chimique est alors nécessaire pour restaurer les caractéristiques du réservoir. Il doit permettre de détruire le cake externe et/ou interne et de nettoyer la zone endommagée aux abords du puits. Ce traitement peut être ou non associé à un traitement de la matrice de type acide.

**Nettoyage des puits de forage**

Lors d'un forage avec une boue à base d'huile, la pression dans le puits ($P_1$) étant généralement supérieure à celle de la formation ($P_2$), les particules solides de la boue forment un dépôt, appelé "cake" sur les parois du puits qui permet de maintenir la stabilité des parois et de limiter la filtration. La boue circule en circuit fermé et ses propriétés, notamment de contrôle de filtrat, ne doivent presque pas être modifiées. Le cake déposé contient donc des additifs réducteurs de filtrat dont la fonction principale est de limiter les quantités de fluide filtrant dans la formation. Ce cake, externe et interne, aura pour conséquence une diminution de la perméabilité de la roche et donc de la productivité du puits, c'est-à-dire que le fluide de gisement circulera plus difficilement dans la roche pour s'écouler dans le puits. Le processus de nettoyage est alors nécessaire pour obtenir la meilleure production de pétrole possible.

Un traitement chimique est souvent employé pour détruire le cake externe et nettoyer la zone endommagée du puits de forage, de sorte que la formation retrouve ses propriétés d'écoulement de liquide (eau, pétrole). Le traitement consiste à déstabiliser, ou "casser" l'émulsion du cake de filtration pour favoriser la coalescence des gouttelettes d'eau. Des systèmes à base de solution aqueuse, généralement de l'acide pour les cakes à base de carbonate, ou des solvants mutuels sont connus, ainsi que des casseurs d'émulsion en phase organique pour les cakes formés en boue à l'huile. Le cake est ensuite destructuré grâce au casseur d'émulsion en phase organique, et lors de la remise en production après le traitement.

Différentes méthodes ont été envisagées dans l'art antérieur pour le traitement des puits in situ:

Le brevet US5909774 décrit par exemple un procédé en trois étapes comprenant l'utilisation successive de trois fluides de traitement, le premier et le second fluide étant constitués d'eau, d'un acide pour dissoudre le cake, d'un solvant mutuel et d'un agent de pénétration de l'émulsion. La troisième étape utilise un fluide de traitement en phase aqueuse comprenant un acide pour continuer la dissolution du cake de filtration et un agent mouillant.

Une autre méthode (WO2004/027213) propose un relargage lent d'un produit acide depuis un casseur d'émulsion très dense utilisé sous forme de "gravel pack", le produit acide permettant de dissoudre ou de casser les composés du cake de filtration dans une formation productrice.

Un effet retard peut être obtenu par microencapsulation d'une source péroxydée qui est activée par les modifications de pH dans le puits (WO 03/054109).

US 2006/223714 décrit une méthode de nettoyage d'un puits ayant été foré avec une boue à base d'huile utilisant un fluide de traitement sous forme d'émulsion eau dans l'huile, permettant de déstructurer le cake mais nécessitant ensuite l'enlèvement des particules solides

Les puits injecteurs d'eau sont utilisés lorsque la pression dans la zone réservoir devient trop faible et que la récupération du pétrole devient difficile. Un puits est alors foré jusqu'à la zone productrice, pour ensuite y injecter de l'eau sous pression. Ce procédé permet de remonter la pression au sein du réservoir et favoriser ainsi une meilleure récupération.

Dans le cas particulier de ces puits, la circulation de l'eau se fait dans le même sens que la filtration de la boue (on injecte l'eau du puits vers la formation) et non pas en sens inverse comme la production du pétrole. Il n'y aura donc pas de "Back-Flow", ni de décollement du cake naturellement par les fluides du puits lors de la remise en production du pétrole. Le nettoyage de ces puits est alors plus difficile. En effet, l'eau, injectée dans le même sens que le filtrat du fluide de forage, c'est-à-dire du puits vers la formation, risque d'entraîner les particules du cake dans la formation, voire même de provoquer la formation d'une émulsion avec le pétrole, et d'endommager davantage la roche.

Dans ces conditions, l'utilisation du produit de nettoyage consistant à casser l'émulsion du cake de filtration pour favoriser la coalescence des gouttelettes d'eau et permettre de déstructurer le cake lors de la remise en production ("Back-Flow") est inefficace. Dans le cas des puits injecteurs d'eau, étant donné qu'il n'y a pas de remise en production, mais injection directe d'eau, il ne suffit pas de déstructurer le cake par coalescence des gouttelettes d'eau, mais il faut également disperser ou dissoudre les solides du cake.

Ainsi, industriellement, la présente invention a pour objet de mettre au point une émulsion permettant de réaliser in situ et en une seule étape de manière efficace :

- le cassage de l'émulsion dans le cake
- la dissolution de particules solides du cake (par exemple: carbonate de calcium ou sulfate de baryum)

Par ailleurs, l'émulsion doit avoir une densité suffisante pour éviter les venues de fluides, avantageusement d'environ 1,2 et elle doit être stable pendant au moins la durée du pompage (en général de l'ordre de plusieurs heures), mais doit se déstabiliser (séparation nette des phases aqueuse et organique) de préférence avant 24h pour que les produits présents dans les deux phases puissent agir sur la formation.

Il a été mis au point une formulation optimale de l'émulsion eau dans huile utilisable de manière avantageuse dans un procédé de traitement des puits injecteurs d'eau en une seule étape, qui permet, par son effet retard (cinétique contrôlée de cassage de l'émulsion eau dans huile) la déstructuration de l'émulsion au sein du cake, grâce à la phase continue organique qui contient l'additif casseur d'émulsion organosoluble, suivie de la dissolution des solides par la phase aqueuse libérée lors du cassage de l'émulsion.

### Objet de l'invention

L'invention concerne une formulation de traitement de puits forés en boue à l'huile, de préférence des puits injecteurs, sous forme d'une émulsion eau dans huile à effet retardé comprenant :

1. une phase aqueuse dispersée incluant au moins un agent dissolvant des solides et un additif en phase aqueuse permettant de contrôler la cinétique de cassage de l'émulsion,
2. une phase organique continue comprenant au moins un additif casseur d'émulsion ("breaker") en phase huile,
3. au moins un émulsifiant,
4. et au moins un agent alourdissant (sous forme de sels solubles).

L'invention concerne également une méthode de traitement des puits forés en boue à l'huile, notamment les puits injecteurs, en particulier d'eau, en une seule étape, utilisant ladite formulation.

### Description de l'invention

### Résumé

L'invention concerne un fluide de traitement de puits forés en boues à base d'huile sous forme d'une émulsion eau dans huile comprenant :

a) une phase continue organique comprenant au moins un additif organosoluble casseur d'émulsion ;
b) une phase aqueuse dispersée comprenant au moins un agent dissolvant des solides et au moins un additif hydrosoluble permettant la déstabilisation contrôlée du fluide de traitement;
c) au moins un agent émulsifiant
d) au moins un agent alourdissant sous forme de sels solubles,

le taux et la nature de l'additif hydrosoluble étant choisis afin d'obtenir un effet retard pour la déstabilisation.
Avantageusement le fluide de traitement est compatible avec les fluides de réservoir.
De préférence, le fluide comprend de 20 à 80 % en volume de phase continue organique. Avantageusement, l'émulsifiant est un tensioactif non ionique.
Le fluide de traitement comprend de préférence de 0.05% à 3% poids d'émulsifiant par rapport à la phase continue organique, de manière très préférée de 0.1 à 1% poids d'émulsifiant par rapport à la phase continue organique, et de manière encore plus préférée de 0.2 à 0.8% poids d'émulsifiant par rapport à la phase continue organique.

Avantageusement, le casseur d'émulsion organosoluble est une formulation organique comprenant au moins un constituant choisi parmi les tensioactifs non-ioniques ou cationiques de type copolymères d'oxyde d'éthylène et d'oxyde de propylène, les dérivés d'alcools ou de phénols à enchaînements alcoxylés ou polyalcoxylés, les polyalkylèneglycols, les polyamines, les dérivés alcoxylés ou polyalcoxylés d'amines, les sels d'ammonium quaternaires, les esters d'alcanolamines quaternisées, et les dérivés siliconés, les compositions amphiphiles non-ioniques obtenues par réaction d'au moins une huile végétale polymérisée, sur au moins un aminoalcool, et les esters alkyliques d'acides gras dérivés d'huiles naturelles, végétales ou animales, ainsi que tout autre dérivé d'acides gras, notamment les acides gras monocarboxyliques insaturés polymérisés.

L'agent de dissolution des solides est préférentiellement choisi parmi les acides faibles ou forts, les mélanges d'acides forts et d'agents chélatants, et les agents spécifiques de dissolution de la barytine, seuls ou en mélange.

L'additif hydrosoluble est de préférence un ester d'acide gras faiblement hydrolysable.

L'agent alourdissant est avantageusement choisi parmi les sels anioniques de type chlorures, bromures et formiates, le cation étant choisi parmi le calcium, le sodium, le potassium et le césium.

De manière préférée, l'agent alourdissant est le formiate de potassium ou de césium.

L'invention concerne également une méthode de traitement des puits forés en boues à base d'huile en une seule étape de traitement c) dans laquelle :

- on prépare un fluide de traitement sous forme d'une émulsion eau dans huile comprenant :

  o une phase continue organique comprenant au moins un additif organosoluble casseur d'émulsion ;
  o une phase aqueuse dispersée comprenant au moins un agent dissolvant des solides et au moins un additif hydrosoluble permettant un effet retardé de la déstabilisation du fluide de traitement;
  o au moins un agent émulsifiant;
  o au moins un agent alourdissant sous forme de sels solubles.

- on injecte ladite émulsion dans le puits en contrôlant la cinétique de déstabilisation du fluide de traitement au moyen de l'additif hydrosoluble afin d'assurer le cassage de l'émulsion eau dans huile in situ;
- on traite le puits par déstructuration du cake de filtration à la paroi au moyen de l'additif organosoluble et par dissolution des solides du cake au moyen de l'agent de dissolution des solides.

Avantageusement on vérifie la compatibilité du fluide de traitement avec les fluides de réservoir.

De préférence, le puits est un puits injecteur, de manière très préférée un puits injecteur d'eau.

Avantageusement l'additif organosoluble est une formulation organique comprenant au moins un constituant choisi parmi les tensioactifs non-ioniques ou cationiques de type copolymères d'oxyde d'éthylène et d'oxyde de propylène, les dérivés d'alcools ou de phénols à enchaînements alcoxylés ou polyalcoxylés, les polyalkylèneglycols, les polyamines, les dérivés alcoxylés ou polyalcoxylés d'amines, les sels d'ammonium quaternaires, les esters d'alcanolamines quaternisées, et les dérivés siliconés, les compositions amphiphiles non-ioniques obtenues par réaction d'au moins une huile végétale polymérisée, sur au moins un aminoalcool, et les esters alkyliques d'acides gras dérivés d'huiles naturelles, végétales ou animales, ainsi que tout autre dérivé d'acides gras, notamment les acides gras monocarboxyliques insaturés polymérisés.

Avantageusement l'agent de dissolution des solides est choisi parmi les acides faibles ou forts, les mélanges d'acides forts et d'agents chélatants, et les agents spécifiques de dissolution de la barytine, seuls ou en mélange.

De préférence, l'additif hydrosoluble permettant l'effet retardé est un ester d'acide gras faiblement hydrolysable.

### Description détaillée de l'invention

La formulation de traitement de puits, de préférence des puits injecteurs d'eau, se présente sous forme d'une émulsion eau dans huile à effet retardé comprenant :

1. une phase aqueuse dispersée incluant au moins un agent dissolvant des solides et un additif en phase aqueuse permettant de contrôler la cinétique de cassage de l'émulsion eau dans huile,
2. une phase organique continue comprenant au moins un additif casseur d'émulsion ("breaker") en phase huile,
3. au moins un émulsifiant
4. et au moins un agent alourdissant (sous forme de sels solubles).

Le rapport volumique eau/huile dans l'émulsion est généralement compris entre 20/80 et 80/20, de préférence il est de l'ordre de 50/50.

<u>Phase organique continue</u>

**Les additifs casseurs d'émulsion en phase organique** utilisables selon l'invention sont notamment choisis parmi les formulations désémulsionnantes comprenant:

1. - à titre d'agent désémulsionnant, au moins un constituant choisi parmi les tensioactifs non-ioniques ou cationiques de type copolymères d'oxyde d'éthylène et d'oxyde de propylène, les dérivés d'alcools ou de phénols à enchaînements alcoxylés ou polyalcoxylés, les polyalkylèneglycols, les polyamines, les dérivés alcoxylés ou polyalcoxylés d'amines, les sels d'ammonium quaternaires, les esters d'alcanolamines quaternisées, et les dérivés siliconés, les compositions amphiphiles non-ioniques obtenues par réaction d'au moins une huile végétale polymérisée, sur au moins un aminoalcool, et les esters alkyliques d'acides gras dérivés d'huiles naturelles, végétales ou animales, éventuellement alcoxylés ou polyalcoxylés, ainsi que tout autre dérivé d'acides gras, notamment les acides gras monocarboxyliques insaturés polymérisés;

- éventuellement au moins un agent mouillant choisi parmi les tensioactifs anioniques ;
- et éventuellement au moins un solvant ;

l'ensemble étant en mélange dans une base organique.

La base organique peut être toute base organique, de préférence une huile, une coupe pétrolière : gazole, essence, kérosène ou des esters d'huiles naturelles végétales ou animales ou bien des coupes hydrocarbures de faible toxicité comprenant des oléfines ou des n ou iso alcanes.

Les formulations et composés cités ci-dessus sont décrits dans les brevets EP 1 190 754 A1 et EP 1 208 898 A1. Cependant toute composition organosoluble connue de l'homme du métier permettant la déstructuration de l'émulsion au sein du cake convient.

De préférence, l'additif casseur d'émulsion organosoluble est le Radiagreen CLO™ d'Oleon.

<u>Phase aqueuse dispersée</u>

**Les agents de dissolution des solides** sont tous les produits utilisables en phase aqueuse connus de l'homme du métier, notamment les acides forts ou faibles permettant de dissoudre notamment les carbonates. D'autres agents peuvent être utilisés seuls ou en mélange avec les acides, pour dissoudre plus spécifiquement la barytine, notamment des mélanges acides forts et agents chélatants (par exemple un mélange d'acide fluorhydrique, d'acide chlorhydrique et d'EDTA), ou des agents spécifiquement dirigés vers la dissolution de la barytine tels que l'HDC Mark II ou III commercialisés par Well-Flow International.

Dans la formulation de fluide de traitement selon l'invention, la phase aqueuse comprend également un additif tensio actif en phase aqueuse qui permet de manière avantageuse de contrôler la cinétique de cassage de l'émulsion à effet retardé.

L'additif tensio actif en phase aqueuse est avantageusement choisi parmi les esters d'acides gras. De préférence, ledit ester d'acide gras est faiblement hydrolysable afin d'assurer le maintien de ses propriétés tensioactives initiales.

Avantageusement l'additif en phase aqueuse est une composition telle que décrite dans le brevet FR 2 811 326, à savoir une composition concentrée d'un ou plusieurs composés choisis dans le groupe des esters partiels de polyols avec des acides gras en C6-C22, les longueurs de chaînes des parties acide et alcool étant choisies telles que l'ester ainsi obtenu présente une dispersion suffisante dans l'eau, une compatibilité avec lesdits constituants, ne forme pas d'émulsion avec l'huile du réservoir et s'adsorbe suffisamment sur la formation poreuse.

De préférence la longueur de chaîne des acides gras est comprise entre C6 et C12 et de manière encore plus préférée comprise entre C8 et C10.

De préférence, dans l'ester partiel, le rapport molaire du nombre de groupes hydroxyles libres au nombre de groupes hydroxyles estérifiés par un acide gras est d'au moins 1:1, de manière très préférée au moins 2:1, de manière encore plus préférée au moins 3:1.

De préférence, la composition est un ester de polyglycérol et d'acide gras C8-C10.

Une composition préférée du polyglycérol consiste en : entre 24 et 30 % de glycérol, de préférence 27 % ; entre 28 et 34 % de diglycérol, de préférence 31 % ; entre 20 et 26 % de triglycérol, de préférence 23 %, entre 9 et 15 % de tétraglycérol, de préférence 12 % ; entre 4 et 10 % de pentaglycérol, de préférence 7 %.

Le Radiagreen RA™ d'Oleon est un choix très avantageux.

<u>Emulsifiant :</u> Tous les émulsifiants classiques tensio-actifs peuvent être utilisés, de préférence les tensio actifs non ioniques. Un agent préféré est le Radiagreen 7155 d'OLEON.

La quantité d'émulsifiant est généralement comprise entre 0.05 et 3 % poids par rapport à la phase organique, avantageusement entre 0.1 et 1 %, de préférence 0.2-0.8%, de manière très préférée de l'ordre de 0.7% pour que l'émulsion soit suffisamment stable sans être visqueuse.

<u>Agent alourdissant :</u> l'agent alourdissant permettant notamment de donner la densité désirée à la formulation est choisi parmi les agents alourdissants solubles classiques, en particulier les sels anioniques du type formiate, chlorure, bromure. Le cation est de préférence choisi parmi le calcium, le potassium, le césium, le sodium. Des sels préférés sont les sels à base de formiate, notamment le formiate de potassium ou de césium.

*Exemples*

**Exemple 1 : Boues et formulations utilisées**

Deux fluides de forage (boues à l'huile) ont été sélectionnés, chacun étant alourdi par des composés différents :

**OBM1:** boue alourdie par des carbonates seulement (densité 1.14)
**OBM2:** boue alourdie par un mélange barytine/carbonate (75%/25% poids) (densité 1.14).

Les compositions des boues sont données ci-dessous :
Boue alourdie avec barytine + carbonate (OBM2) :

| | |
|---|---|
| Huile de base | 0.556 m3 |
| Émulsifiant | 34.2 kg/m3 |
| Chaux | 11.4 kg/m3 |
| Soude caustique | 2.8 kg/m3 |
| Agent réducteur de filtrat | 5.7 kg/m3 |
| Agent viscosifiant | 17.1 kg/m3 |
| Eau | 0.32 m3 |
| Chlorure de calcium | 109.4 kg/m3 |

Boue alourdie avec carbonates (OBM1) :

| | |
|---|---|
| Huile de base | 0.682 m3 |
| Emulsifiant 1 | 11.4 kg/m3 |
| Emulsifiant 2 | 11.4 kg/m3 |
| Réducteur de filtrat1 | 17 kg/m3 |
| Chaux | 17 kg/m3 |
| Réducteur de filtrat2 | 8.6 kg/m3 |
| eau | 0.231 m3 |
| CaCl2 @ 97% | 79.57 kg/m3 |
| viscosifiant1 | 8.6 kg/m3 |
| Viscosifiant2 | 11.4 kg/m3 |

**Formulation des émulsions**

Bo1 = Radiagreen CLO™, Bw1 est un acide organique, Bw2 = HDC Mark II, EB1= Radiagreen RA™

Les émulsions ont été préparées à partir d'une phase organique et d'une phase aqueuse.

La phase organique est composée d'une huile minérale de faible toxicité (HDF2000) contenant le breaker de cake organosoluble (**Bo1**), et un émulsifiant qui permet la formation et la stabilisation de l'émulsion (**Em1**).

La phase aqueuse est composée de saumure pour ajuster la densité du fluide (formiate de potassium et éventuellement formiate de césium), plus un agent dissolvant des carbonates (acide organique **Bw1**) et/ou un agent dissolvant de la barytine et des carbonates **Bw2**. Un autre additif hydrosoluble (tensio-actif) est utilisé pour contrôler la cinétique de cassage de l'émulsion (**EB1**). Tous les additifs sont disponibles commercialement.

Les émulsions sont faites par ajout de la phase aqueuse dans la phase organique sous agitation à 6000 tr/min pendant 1 min 30 avec un dispositif d'émulsification Silverson L4RT.

**Exemple 2 : Tests de stabilité**

Des tests de stabilité simples de type "bottle tests" ont été réalisés à une température de 60°C afin de suivre la cinétique de cassage des émulsions. On considère que le cassage est complet lorsque les deux phases (organique et aqueuse) sont complètement séparées par une interface fine. La présence d'une couche résiduelle d'émulsion à la fin du processus de cassage (interface épaisse) est considérée non acceptable.

**Exemple 3 : Tests de compatibilité**

La compatibilité entre le filtrat de la boue, les fluides de réservoir et le fluide de traitement est d'une importance majeure. En effet, la formation d'une émulsion stable entre tous les fluides peut être la cause d'un endommagement additionnel voire entraîner un colmatage du puits et doit être considéré comme un critère permettant de disqualifier une formulation de nettoyage.

Un simple test de discrimination sous des conditions de faible agitation est mené sur différentes formulations. La procédure expérimentale est la suivante :

- agitation à la main pendant 1 minute d'un mélange composé d'1/3 de breaker (en phase aqueuse, en phase organique ou en émulsion), 1/3 de fluide de réservoir (brut 80% volume, saumure 20% volume) et 1/3 de filtrat de boue à l'huile (OBM) reconstitué. La stabilité de chaque mélange est observée en fonction du temps à une température de 60°C.

**Exemple 4 : Tests d'efficacité des agents dissolvant des solides**

Quelques essais d'efficacité ont été réalisés avec l'agent dissolvant **Bw2** des carbonates et de la barytine pour évaluer son efficacité sur différents mélanges de solides, mouillés ou non par la phase continue de la boue à l'huile (OBM).

Dans la procédure expérimentale pour les solides secs, environ 10 g de différents mélanges de barytine et de carbonates (rapports pondéraux 25/75, 50/50 et 75/25) sont pesés, mis en flacon avec 100 ml de **Bw2**, et agités dans une étuve à rouleaux pendant 20 heures à 45°C. Le flacon est ensuite enlevé du four, mis à refroidir et le liquide est filtré dans une cellule HPHT (haute pression haute température) sur un papier-filtre pré pesé. De l'eau est ajoutée au flacon et filtrée jusqu'à l'état sec. Finalement le papier filtre et les solides restants sont mis dans un four à 60°C, enlevés une fois secs et pesés.

Dans la procédure expérimentale avec les solides mouillés par l'huile, environ 10 g de barytine et de carbonates sont mélangés avec 6 ml de filtrat de boue à l'huile (OBM) reconstitué dans un flacon ou une cellule de vieillissement.

Dans certains essais, ces solides mouillés ont d'abord été traités par prélavage au breaker **Bo1** (casseur de cake organosoluble): 100 ml d'une solution de 1 à 2% de **Bo1** dans l'huile minérale HDF2000 sont ajoutés dans un flacon qui est agité dans une étuve à rouleaux pendant deux heures à 60°C ; le flacon est ensuite enlevé du four, mis au refroidissement et le liquide est filtré dans une cellule HPHT sur un papier filtre pré pesé. Les solides filtrés sont ensuite mis en flacon dans un excès d'huile minérale de faible toxicité, agités, rincés et filtrés sur un papier filtre pré pesé jusqu'à l'état sec. Le papier filtre est ensuite enlevé et le cake de solides transféré soigneusement dans un autre flacon. Le papier filtre avec les solides résiduels est transféré dans une étuve à 60°C, enlevé de l'étuve une fois sec et pesé. 100 ml de **Bw2** sont ajoutés dans le flacon contenant les solides mouillés. Le flacon est ensuite agité dans une étuve à rouleaux à chaud pendant 20 heures à 60°C, enlevé du four, mis à refroidir et son contenu est filtré dans une cellule HPHT sur un second papier filtre pré-pesé. De l'eau est ajoutée dans le flacon pour récupérer les solides restants et le liquide obtenu est filtré jusqu'à l'état sec. Enfin, le papier filtre avec les solides est mis dans le four à 60°C, enlevé une fois sec et pesé.

Les résultats sont exprimés en termes d'efficacité de dissolution : (poids de solides dissous/poids initial des solides)*100.

**Exemple 5 : Tests dynamiques d'efficacité sur carotte**

Pour toutes les expériences réalisées sur milieu poreux, des carottes de sable Clashach de longueur 70 mm et de diamètre 33 mm ont été utilisées. Le sable est composé de 94.7 % quartz, 2.6% feldspar potassique et une faible fraction d'argile (0.7% d'illite et 0.5% de chlorite). La perméabilité moyenne à la saumure est de 500 mD et la porosité de 15% approximativement.

Les carottes sont placées dans une cellule Hassler, saturées à la saumure (40 g/L NaCl, 5 g/L KCl) et amenées à saturation d'eau résiduelle ($S_{wi}$) par passage d'une nuit sous flux à bas débit de kérosène ($\eta$ = 1.45 mPa.s at 25°C) dans le sens opposé à la filtration. La perméabilité au kérosène est mesurée à différents débits et prise comme perméabilité initiale avant endommagement (**$Ko_{Swi}$**).

Un dispositif de filtration dynamique est ensuite utilisé pour l'injection de la boue à base d'huile à 60°C sous

une pression différentielle $\Delta P=35$ bar. Le dispositif est équipé d'une géométrie cône/plan qui fournit un taux de cisaillement uniforme à travers la surface de filtration. La procédure d'injection de la boue inclut trois étapes :

- 3 heures de filtration dynamique
- 2 heures de filtration statique
- 1 heure de filtration dynamique.

Après la mise en place de la boue, l'efficacité du fluide de traitement selon l'invention sur le cake formé en boue à l'huile est testée avec le même dispositif de filtration dynamique.

Le fluide de traitement est filtré sous une pression différentielle $\Delta P=10$ bar jusqu'à un volume équivalent à 10 fois le volume poreux. Ensuite, la filtration du fluide est arrêtée en vue de permettre l'action de traitement pendant un temps de contact de 3 jours sous une pression différentielle $\Delta P$ d'environ 0.7 bar.

La dernière étape consiste à enlever la carotte et à procéder à l'injection de saumure (40 g/L NaCl, 5 g/L KCl) dans la cellule Hassler dans le même sens que la filtration pendant une nuit à faible débit. La perméabilité à l'eau finale ($K_{wf}$) est mesurée le lendemain. La perméabilité à l'eau initiale Kw est obtenue selon le même mode expérimental, mais sans l'étape de traitement avec le fluide de nettoyage.

Le taux d'endommagement en injectivité retenue est défini comme :

$$DR = 100 \times (1 - K_{wf}/K_w).$$

**Exemple 6 : Résultats**

**Efficacité des agents dissolvants des solides**

Un acide organique commercial (acide acétique) est utilisé pour la dissolution des particules de carbonate de calcium (**Bw1**). Les particules de sulfate de baryum n'étant pas attaquées par les acides faibles, une formulation commerciale (**Bw2** HDC Mark II) a été utilisée et testée pour différents types de solides : barytine, carbonate de calcium et des mélanges des deux. Les tests sont réalisés à 60°C sur des solides mouillés par du filtrat de boue à l'huile reconstitué. L'efficacité de l'agent Bw2 est également testée avec et sans prétraitement des solides mouillés au filtrat avec l'additif casseur d'émulsion organosoluble **Bo1** (prélavage avec une solution de **Bo1**). Des tests complémentaires sont réalisés directement sur les solides secs à 45°C selon les procédures décrites précédemment.

Dans tous les cas, la formulation **Bw2** est efficace à la fois contre les carbonates et les particules de barytine (résultats Tableau 1). Les efficacités mesurées contre la barytine pure et les carbonates purs sont d'environ 30% et 55% respectivement et n'apparaissent pas affectées par la présence de l'acide organique **Bw1** dans la solution de traitement, ni par le pré lavage des solides par l'additif casseur d'émulsion organosoluble **Bo1.** L'efficacité semble même légèrement meilleure dans le cas du mélange de solides mouillés (58%). Les tests sur solides secs à 45°C montrent une augmentation de l'efficacité avec la quantité de barytine dans le mélange de solides (de 43% à 58%).

**Sélection de l'émulsion eau dans huile ayant une cinétique de cassage contrôlée**

Trois types d'émulsions sont formulées avec différents agents de dissolution des solides

(a) avec **Bw1** and **Bw2**, (b) avec **Bw2** mais sans **Bw1**, et (c) avec **Bw1** mais sans **Bw2.** Leur cinétique de séparation à 60°C sont étudiées, et la qualité de la couche d'émulsion résiduelle à l'interface entre les deux phases séparées est systématiquement reportée. Les paramètres suivants varient : concentration de l'acide Bw1, de l'émulsifiant Em1 et de l'additif hydrosoluble casseur d'émulsion EB1

Les résultats sont donnés dans les Tableaux 2, 3 et 4 pour les émulsions A, B et C, qui sont des émulsions eau dans huile à 50%/50% en volume, de densité 1,2. Les pourcentages indiqués dans les tableaux sont en poids.

Pour le tableau 2 (émulsions de type A) : La saumure est composée de 50% en volume d'une solution saturée en formiate de potassium et 50% en volume d'une solution saturée en formiate de césium. Le rapport saumure/Bw2 est de 50%/50% en volume.

Pour le tableau 3 (émulsions de type B): la saumure est composée de 50% en volume d'une solution saturée en formiate de potassium et 50% en volume d'une solution saturée en formiate de césium.

Le rapport saumure/Bw2 est de 50%/50% en volume.

Pour le tableau 4 (émulsions de type C): la saumure est composée d'une solution saturée en formiate de potassium.

1. Émulsions A avec Bw1 et Bw2 (**Tableau 2**): en absence de l'additif hydrosoluble EB1, les émulsions sont très stables. La diminution de la concentration d'acide à 0.1 M permet une séparation lente, mais avec une couche d'émulsion résiduelle à l'interface. L'ajout de EB1 (tensio actif en phase aqueuse) semble nécessaire pour contrôler la cinétique de séparation complète des deux phases. Une émulsion formée de 0.3 M d'acide, 0.5% de EB1 et 0.5% de Em1 commence à casser au bout de 5 heures.

2. Émulsion B avec Bw2 et sans Bw1 (**Tableau 3**): Les émulsions ne sont pas stables. Une couche d'émulsion résiduelle est observée en l'absence de l'additif EB1.

3. Émulsions C avec Bw1 et sans Bw2 (**Tableau 4**): les émulsions obtenues sont très stables. L'ajout de l'additif EB1 permet une séparation complète des phases sans couche d'émulsion résiduelle à l'interface. Le temps requis pour une séparation complète est d'autant plus long que la concentration en EB1 est faible. Des émulsions contenant au moins 0.5% d'émulsifiant sont stables pendant plusieurs heures.

L'additif EB1 est donc essentiel dans le contrôle de la cinétique de séparation. Dans les conditions de laboratoire, les émulsions selon l'invention A6 et C4 sont stables pendant une durée comprise entre 8 et 17h. Les principaux paramètres rhéologiques déterminés au Fann 35 à 25°C (AV : viscosité apparente, PV : viscosité plastique, YV : tension seuil) sont donnés dans le **Tableau 5.**

Les deux émulsions A6 et C4 peuvent être utilisées pour déstabiliser les cakes formés par les boues à l'huile alourdies aux carbonates, tandis que l'émulsion A6 est plus particulièrement adaptée au traitement des cakes formés à partir de boues contenant de la barytine.

Tableau 1

| | 60°C - Solides mouillés | | | 45°C - Solides secs | | |
|---|---|---|---|---|---|---|
| | 100% Barytine | 100% Carbonate | 25% Barytine 75% Carbonate | 25% Barytine 75% Carbonate | 50% Barytine 50% Carbonate | 75% Barytine 25% Carbonate |
| 0% bo1 | 35 | 53 | 58 | 43 | 55 | 58 |
| 0% Bo1 + Bw1 1M* | 27 | 55 | - | - | - | - - |
| 1% Bo1 (prélavage) | 35 | 55 | - | - | - | - |
| 2% Bo1 (prélavage) | 32 | 53 | - | - | - | - |
| * Bw1 1M ajouté dans la phase aqueuse avec Bw2 | | | | | | |

Tableau 2

| | A1 | A2 | A3 | A4 | A5 | A6 |
|---|---|---|---|---|---|---|
| Saumure+Bw2 (phase aqueuse) | x | x | x | x | x | x |
| Bw1 (phase aqueuse) | 1M | 1M | 0.1M | 0.1M | 0.3M | 0.3M |
| EB1 (phase aqueuse) | 0% | 1% | 0% | 1% | 0.5% | 0.5% |
| HDF2000+1 %Bo1 (phase huile) | x | x | x | x | x | x |
| Em1 (phase huile) | 0.3% | 0.3% | 0.3% | 0.3% | 0.3% | 0.5% |
| Temps de séparation | stable | >6h | >6h | 1h30 | 4h | >6h |
| Couche d'émulsion résiduelle | - | 0 | 1 cm | 0 | 0 | 0 |

**Tableau 3**

|  | B1 | B2 | B3 | B5 | B6 | B7 | B8 |
|---|---|---|---|---|---|---|---|
| **Saumure+Bw2 (phase aqueuse)** | x | x | x | x | x | x | x |
| **EB1 (phase aqueuse)** | 0% | 1% | 0.1% | 0% | 0% | 0% | 1% |
| **HDF2000+1%Bo1 (phase huile)** | x | x | x | x | x | x | x |
| **Em1 (phase huile)** | 0.3% | 0.3% | 0.3% | 0.5% | 0.7% | 1% | 1% |
| **Temps de séparation** | 1h45 | 8 min | 1h | 2h45 | >3h | >3h10 | 55 min |
| **Couche d'émulsion résiduelle** | 0.5 cm | 0 | 0.2 cm | 1 cm | 2 cm | 2 cm | 0 |

**Tableau 4**

|  | C1 | C2 | C3 | C4 | C5 |
|---|---|---|---|---|---|
| **Saumure (phase aqueuse)** | x | x | x | x | x |
| **Bw1 (phase aqueuse)** | 1M | 1M | 1M | 1M | 1M |
| **EB1 (phase aqueuse)** | 0% | 1% | 0.5% | 0.5% | 0.3% |
| **HDF 2000 +1%Bol (phase huile)** | x | x | x | x | x |
| **Em1 (phase huile)** | 0.3% | 0.3% | 0.5% | 0.7% | 0.7% |
| **Temps de séparation** | plusieurs heures | quelques minutes | plusieurs heures | plusieurs heures | plusieurs heures |
| **Couche d'émulsion résiduelle** | 2 cm | 0 | 0 | 0 | 0 |

**Tableau 5**

|  | AV (mPa.s) | PV (mPa.s) | YV(lb/100ft2) |
|---|---|---|---|
| **Emulsion A6** | 50 | 44 | 12 |
| **Emulsion C4** | 47 | 35 | 25 |

**Tests de compatibilité avec les fluides de réservoir**

La compatibilité des formulations avec les fluides de réservoir est évaluée par des tests de compatibilité entre le filtrat de boue, les fluides de réservoir et le fluide de traitement. Une émulsion stable entre ces constituants ne doit pas être formée, au risque de générer un endommagement additionnel, voire un colmatage du puits.

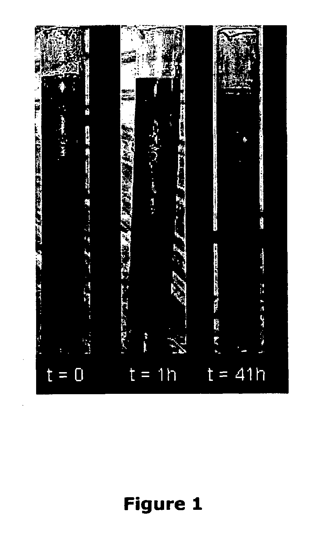

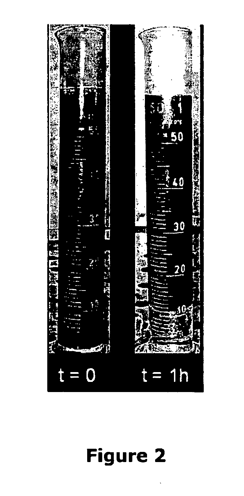

Tous les tests montrent un effet majeur de l'additif hydrosoluble EB1 sur la performance en compatibilité. La **Figure 1** montre l'évolution d'un système émulsifié formé par mélange manuel entre les fluides de réservoir et une émulsion ne contenant pas EB1 : la séparation entre la phase organique et la phase aqueuse est incomplète, même après plusieurs heures, et la phase aqueuse reste très sombre, composée d'une émulsion concentrée eau dans huile. Au contraire, le même système testé avec une émulsion contenant l'additif EB1 montre une très bonne séparation après une heure, et la phase aqueuse séparée est claire et non émulsifiée. (**Figure 2**).

**Réduction du taux d'endommagement**

L'efficacité du fluide A6 est testée contre le cake formé par OBM2 (carbonate et barytine) et celle du fluide C4 contre le cake formé par OBM1 (carbonate seul).

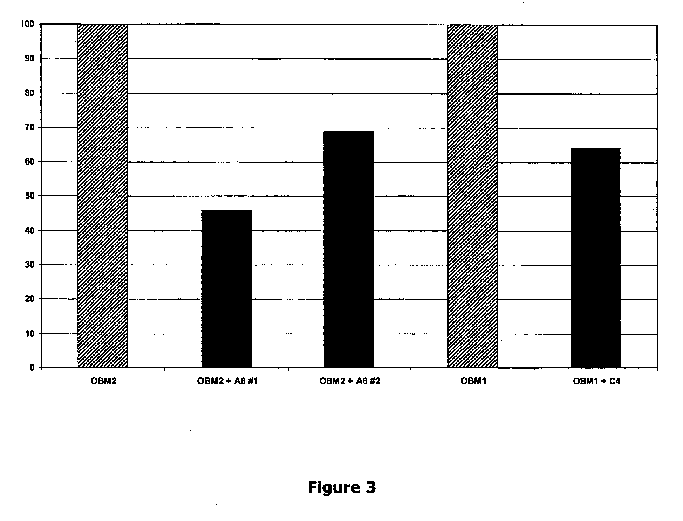

La **Figure 3** montre les résultats obtenus en termes de taux d'endommagement normalisé en injectivité retenue. Le taux d'endommagement en injectivité retenue étant DR = $100 \times (1 - K_{wf}/K_w)$, le taux d'endommagement normalisé est (DR (avec traitement)/DR (blanc, sans traitement))x100.

Les résultats montrent une réduction du taux d'endommagement dans tous les cas : diminution entre 30 et 50% pour l'émulsion A6 et diminution d'environ 40% pour l'émulsion C4.

**Revendications**

1. Fluide de traitement pour le nettoyage de puits forés avec des boues à base d'huile par élimination du cake de filtration, sous forme d'une émulsion eau dans huile comprenant :

   a. une phase continue organique comprenant au moins un additif organosoluble casseur d'émulsion ;
   b. une phase aqueuse dispersée comprenant au moins un additif <u>tensio-actif</u> hydrosoluble permettant la déstabilisation contrôlée du fluide de traitement;
   c. au moins un agent émulsifiant ;
   d. au moins un agent alourdissant sous forme de sels solubles, le taux et la nature de l'additif hydrosoluble étant choisis afin d'obtenir un effet retard pour la déstabilisation.
   **caractérisé en ce que** la phase aqueuse dispersée comprend aussi au moins un agent dissolvant des solides."

2. Fluide selon la revendication 1 comprenant de 20 à 80 % en volume de phase continue organique.

3. Fluide de traitement selon l'une des revendications précédentes dans lequel l'émulsifiant est un tensioactif non ionique.

4. Fluide de traitement selon l'une des revendications précédentes comprenant de 0.05% à 3% poids d'émulsifiant par rapport à la phase continue organique.

5. Fluide de traitement selon la revendication 4 comprenant de 0.1 à 1% poids d'émulsifiant par rapport à la phase continue organique.

6. Fluide de traitement selon la revendication 5 comprenant de 0.2 à 0.8% poids d'émulsifiant par rapport à la phase continue organique.

7. Fluide de traitement selon les revendications précédentes dans lequel le casseur d'émulsion organosoluble est une formulation organique comprenant au moins un constituant choisi parmi les tensioactifs non-ioniques ou cationiques de type copolymères d'oxyde d'éthylène et d'oxyde de propylène, les dérivés d'alcools ou de phénols à enchaînements alcoxylés ou polyalcoxylés, les polyalkylèneglycols, les polyamines, les dérivés alcoxylés ou polyalcoxylés d'amines, les sels d'ammonium quaternaires, les esters d'alcanolamines quaternisées, et les dérivés siliconés, les compositions amphiphiles non-ioniques obtenues par réaction d'au moins une huile végétale polymérisée, sur au moins un aminoalcool, et les esters alkyliques d'acides gras dérivés d'huiles naturelles, végétales ou animales, ainsi que tout autre dérivé d'acides gras, notamment les acides gras monocarboxyliques insaturés polymérisés.

8. Fluide de traitement selon l'une des revendications précédentes dans lequel l'agent de dissolution des solides est choisi parmi les acides faibles ou forts, les mélanges d'acides forts et d'agents chélatants, et les agents spécifiques de dissolution de la barytine, seuls ou en mélange.

9. Fluide de traitement selon l'une des revendications précédentes dans lequel l'additif hydrosoluble est un ester d'acide gras faiblement hydrolysable.

10. Fluide de traitement selon l'une des revendications précédentes dans lequel l'agent alourdissant est choisi parmi les sels anioniques de type chlorures, bromures et formiates, le cation étant choisi parmi le calcium, le sodium, le potassium et le césium.

**11.** Fluide de traitement selon la revendication 10 dans lequel l'agent alourdissant est le formiate de potassium ou de césium.

**12.** Méthode de traitement des puits forés avec des boues à base d'huile comportant une seule étape de nettoyage c) dans laquelle :

a) on prépare un fluide de traitement sous forme d'une émulsion eau dans huile comprenant :

i. une phase continue organique comprenant au moins un additif organosoluble casseur d'émulsion ;
ii. une phase aqueuse dispersée comprenant au moins un agent dissolvant des solides et au moins un additif tensio-actif hydrosoluble permettant un effet retardé de la déstabilisation du fluide de traitement;
iii. au moins un agent émulsifiant;
iv. au moins un agent alourdissant sous forme de sels solubles.

b) on injecte ladite émulsion dans le puits en contrôlant la cinétique de déstabilisation du fluide de traitement au moyen de l'additif hydrosoluble afin d'assurer le cassage retardé de l'émulsion eau dans huile;
c) on casse l'émulsion eau dans huile in situ et

i. on déstructure l'émulsion au sein du cake de filtration grâce à l'additif casseur d'émulsion organosoluble contenu dans la phase continue organique
ii. on dissout les solides du cake au moyen de l'agent de dissolution des solides contenu dans la phase aqueuse dispersée libérée lors du cassage de l'émulsion afin d'éliminer le cake de filtration à la paroi.

**13.** Méthode de traitement de puits selon la revendication 12 dans laquelle on vérifie la compatibilité du fluide de traitement avec les fluides de réservoir.

**14.** Méthode de traitement de puits selon la revendication 12 ou 13 dans laquelle le puits est un puits injecteur.

**15.** Méthode de traitement de puits selon la revendication 14 dans laquelle le puits est un puits injecteur d'eau.

**16.** Méthode de traitement de puits selon l'une des revendications 12 à 15 dans laquelle l'additif organosoluble est une formulation organique comprenant au moins un constituant choisi parmi les tensioactifs non-ioniques ou cationiques de type copolymères d'oxyde d'éthylène et d'oxyde de propylène, les dérivés d'alcools ou de phénols à enchaînements alcoxylés ou polyalcoxylés, les polyalkylèneglycols, les polyamines, les dérivés alcoxylés ou polyalcoxylés d'amines, les sels d'ammonium quaternaires, les esters d'alcanolamines quaternisées, et les dérivés siliconés, les compositions amphiphiles non-ioniques obtenues par réaction d'au moins une huile végétale polymérisée, sur au moins un aminoalcool, et les esters alkyliques d'acides gras dérivés d'huiles naturelles, végétales ou animales, ainsi que tout autre dérivé d'acides gras, notamment les acides gras monocarboxyliques insaturés polymérisés.

**17.** Méthode de traitement de puits selon l'une des revendications 12 à 16 dans laquelle l'agent de dissolution des solides est choisi parmi les acides faibles ou forts, les mélanges d'acides forts et d'agents chélatants, et les agents spécifiques de dissolution de la barytine, seuls ou en mélange.

**18.** Méthode de traitement des puits injecteurs selon l'une des revendications 12 à 17 dans laquelle l'additif hydrosoluble permettant l'effet retardé est un ester d'acide gras faiblement hydrolysable.

**Patentansprüche**

**1.** Behandlungsfluid zur Reinigung von Bohrungen mit Schlämmen auf Ölbasis durch Entfernung des Filterkuchens, in Form einer Wasser-in-Öl-Emulsion, umfassend:

a. eine kontinuierliche organische Phase, umfassend mindestens ein in einem organischen Lösemittel lösliches, demulgierendes Additiv;
b. eine dispergierte wässrige Phase, umfassend mindestens ein wasserlösliches, oberflächenaktives Additiv, das die kontrollierte Destabilisierung des Behandlungsfluids ermöglicht;
c. mindestens einen Emulgator;
d. mindestens ein Beschwerungsmittel in Form von löslichen Salzen, wobei der Anteil und die Art des wasserlöslichen Additivs ausgewählt sind, um eine die Destabilisierung verzögernde Wirkung zu erhalten,

**dadurch gekennzeichnet, dass** die dispergierte wässrige Phase auch mindestens ein Feststoffe auflösendes Mittel umfasst.

2. Fluid nach Anspruch 1, umfassend 20 bis 80 Vol.-% kontinuierliche organische Phase.

3. Behandlungsfluid nach einem der vorhergehenden Ansprüche, wobei der Emulgator ein nicht ionisches oberflächenaktives Mittel ist.

4. Behandlungsfluid nach einem der vorhergehenden Ansprüche, umfassend 0,05 Gew.-% bis 3 Gew.-% Emulgator, bezogen auf die kontinuierliche organische Phase.

5. Behandlungsfluid nach Anspruch 4, umfassend 0,1 Gew.-% bis 1 Gew.-% Emulgator, bezogen auf die kontinuierliche organische Phase.

6. Behandlungsfluid nach Anspruch 5, umfassend 0,2 Gew.-% bis 0,8 Gew.-% Emulgator, bezogen auf die kontinuierliche organische Phase.

7. Behandlungsfluid nach den vorhergehenden Ansprüchen, wobei der in einem organischen Lösungsmittel lösliche Demulgator eine organische Formulierung ist, umfassend mindestens einen Bestandteil, ausgewählt aus den nicht ionischen oder kationischen oberflächenaktiven Mitteln vom Typ Ethylenoxid- und Propylenoxid-Copolymer, den Alkoholderivaten oder Phenolen mit alkoxylierten oder polyalkoxylierten Ketten, den Polyalkylenglykolen, den Polyaminen, den alkoxylierten oder polyalkoxyfierten Aminderivaten, den quartären Ammoniumsalzen, den quaternisierten Alkanolaminestern und den Siliconderivaten, den nicht ionischen amphiphilen Zusammensetzungen, erhalten durch Umsetzung mindestens eines polymerisierten Pflanzenöls mit mindestens einem Aminoalkohol, und den von natürlichen, pflanzlichen oder tierischen Ölen abgeleiteten Fettsäurealkylestern sowie jedem anderen Fettsäurederivat, insbesondere den polymerisierten, ungesättigten Monocarbonsäuren.

8. Behandlungsfluid nach einem der vorhergehenden Ansprüche, wobei das Mittel zur Auflösung der Feststoffe ausgewählt ist aus den schwachen oder starken Säuren, den Gemischen aus starken Säuren und Chelatbildnern und den spezifischen Mitteln zur Auflösung von Baryt, allein oder als Gemisch.

9. Behandlungsfluid nach einem der vorhergehenden Ansprüche, wobei das wasserlösliche Additiv ein in geringem Umfang hydrolysierbarer Fettsäureester ist.

10. Behandlungsfluid nach einem der vorhergehenden Ansprüche, wobei das Beschwerungsmittel ausgewählt ist aus den anionischen Salzen vom Typ der Chloride, Bromide und Formiate, wobei das Kation aus Calcium, Natrium, Kalium und Cäsium ausgewählt ist.

11. Behandlungsfluid nach Anspruch 10, wobei das Beschwerungsmittel Kalium- oder Cäsiumformiat ist.

12. Verfahren zur Behandlung von Bohrungen mit Schlämmen auf Ölbasis, umfassend einen einzigen Reinigungsschritt c), wobei:

    a) ein Behandlungsfluid in Form einer Öl-in-Wasser-Emulsion hergestellt wird, umfassend:

        i. eine kontinuierliche organische Phase, umfassend mindestens ein in einem organischen Lösemittel lösliches, demulgierendes Additiv;
        ii. eine dispergierte wässrige Phase, umfassend mindestens ein Mittel zur Auflösung der Feststoffe und mindestens ein wasserlösliches oberflächenaktives Additiv, das eine die Destabilisierung des Behandlungsfluids verzögernde Wirkung ermöglicht;
        iii. mindestens einen Emulgator;
        iv. mindestens ein Beschwerungsmittel in Form von löslichen Salzen.

    b) die Emulsion in die Bohrung injiziert wird, wobei die Kinetik der Destabilisierung des Behandlungsfluids mithilfe des wasserlöslichen Additivs kontrolliert wird, um die verzögerte Demulsion der Wasser-in-Öl-Emulsion zu gewährleisten;

c) die Wasser-in-Öl-Emulsion in situ demulgiert wird, und

I. die Emulsion innerhalb des Filterkuchens mithilfe des in einem organischen Lösemittel löslichen demulgierenden Additivs, das in der kontinuierlichen organische Phase enthalten ist, destrukturiert wird,
II. die Feststoffe des Kuchens mithilfe des Mittels zur Auflösung der Feststoffe aufgelöst werden, das in der dispergierten wässrigen Phase enthalten ist, das während der Emulsion freigesetzt wird, um den Filterkuchen von der Wand zu entfernen.

**13.** Verfahren zur Behandlung von Bohrungen nach Anspruch 12, wobei die Kompatibilität des Behandlungsfluids mit den Fluiden der Lagerstätte überprüft wird.

**14.** Verfahren zur Behandlung von Bohrungen nach Anspruch 12 oder 13, wobei die Bohrung eine Injektionsbohrung ist.

**15.** Verfahren zur Behandlung von Bohrungen nach Anspruch 14, wobei die Bohrung eine Wasserinjektionsbohrung ist.

**16.** Verfahren zu Behandlung von Bohrungen nach einem der Ansprüche 12 bis 15, wobei das in einem organischen Lösungsmittel lösliche Additiv eine organische Formulierung ist, umfassend mindestens einen Bestandteil, ausgewählt aus den nicht ionischen oder kationischen oberflächenaktiven Mitteln vom Typ Ethylenoxid- und Propylenoxid-Copolymer, den Alkoholderivaten oder Phenolen mit alkoxylierten oder polyalkoxylierten Ketten, den Polyalkylenglykolen, den Polyaminen, den alkoxylierten oder polyalkoxylierten Aminderivaten, den quartären Ammoniumsalzen, den quaternisierten Alkanolaminestern und den Siliconderivaten, den nicht ionischen amphiphilen Zusammensetzungen, erhalten durch Umsetzung mindestens eines polymerisierten Pflanzenöls mit mindestens einem Aminoalkohol, und den von natürlichen, pflanzlichen oder tierischen Ölen abgeleiteten Fettsäurealkylestern sowie jedem anderen Fettsäurederivat, insbesondere den polymerisierten, ungesättigten Monocarbonsäuren.

**17.** Verfahren zur Behandlung nach einem der Ansprüche 12 bis 16, wobei das Mittel zur Auflösung der Feststoffe ausgewählt ist aus den schwachen oder starken Säuren, den Gemischen aus starken Säuren und Chelatbildnern und den spezifischen Mitteln zur Auflösung von Baryt, allein oder als Gemisch.

**18.** Verfahren zur Behandlung von Injektionsbohrungen nach einem der Ansprüche 12 bis 17, wobei das wasserlösliche Additiv, das die verzögerte Wirkung ermöglicht, ein schwach hydrolysierbarer Fettsäureester ist.

**Claims**

**1.** A treatment fluid for cleaning wells bored with oil-based muds through removal of the filter cake, in form of a water-in-oil emulsion comprising:

a) an organic continuous phase comprising at least one emulsion-breaking organosoluble additive,
b) a disperse aqueous phase comprising at least one hydrosoluble surfactant additive allowing controlled destabilization of the treatment fluid,
c) at least one emulsifying agent,
d) at least one weighting agent in form of soluble salts, the proportion and the nature of the hydrosoluble additive being so selected as to obtain a retarding effect for destabilization,

**characterized in that** the disperse aqueous phase also comprises at least one solid-dissolving agent.

**2.** A treatment fluid as claimed in claim 1, comprising 20 to 80 % by volume of organic continuous phase.

**3.** A treatment fluid as claimed in any one of the previous claims, wherein the emulsifier is a non-ionic surfactant.

**4.** A treatment fluid as claimed in any one of the previous claims, comprising 0.05 to 3 % by weight of emulsifier with respect to the organic continuous phase.

**5.** A treatment fluid as claimed in claim 4, comprising 0.1 to 1 % by weight of emulsifier with respect to the organic continuous phase.

**6.** A treatment fluid as claimed in claim 5, comprising 0.2 to 0.8 % by weight of emulsifier with respect to the organic continuous phase.

7. A treatment fluid as claimed in any one of the previous claims, wherein the organosoluble emulsion breaker is an organic formulation comprising at least one constituent selected from among the non-ionic or cationic surfactants of ethylene oxide and propylene oxide copolymers type, derivatives of alcohols or of phenols with alkoxylated or polyalkoxylated chain formations, polyalkylene glycols, polyamines, alkoxylated or polyalkoxylated amine derivatives, quaternary ammonium salts, quaternized alkanolamine esters and silicone derivatives, the non-ionic amphiphilic compositions obtained by reaction of at least one polymerized vegetable oil on at least one amino alcohol, and the fatty acid alkyl esters derived from natural, vegetable or animal oils, as well as any other fatty acid derivative, notably the polymerized unsaturated monocarboxylic fatty acids.

8. A treatment fluid as claimed in any one of the previous claims, wherein the solid-dissolving agent is selected from among the strong or weak acids, the mixtures of strong acids and chelating agents, and the specific barytine-dissolving agents, alone or in admixture.

9. A treatment fluid as claimed in any one of the previous claims, wherein the hydrosoluble additive is a weakly hydrolysable fatty acid ester.

10. A treatment fluid as claimed in any one of the previous claims, wherein the weighting agent is selected from among the anionic salts of chloride, bromide and formiate type, the cation being selected from among calcium, sodium, potassium and cesium.

11. A treatment fluid as claimed in claim 10, wherein the weighting agent is potassium or cesium formiate.

12. A method of treating wells bored with oil-based muds comprising a single cleaning stage c) comprising:

   a) preparing a treatment fluid in form of a water-in-oil emulsion comprising:

   i. an organic continuous phase comprising at least one emulsion-breaking organosoluble additive,
   ii. a disperse aqueous phase comprising at least one hydrosoluble surfactant additive allowing controlled destabilization of the treatment fluid,
   iii. at least one emulsifying agent,
   iv. at least one weighting agent in form of soluble salts,

   b) injecting said emulsion into the well while controlling the treatment fluid destabilization kinetics by means of the hydrosoluble additive so as to ensure retarded breakdown of the water-in-oil emulsion,
   c) breaking the water-in-oil emulsion in situ and

   i. deconstructing the emulsion in the filter cake by means of the organosoluble emulsion-breaking additive contained in the organic continuous phase,
   ii. dissolving the cake solids by means of the solid-dissolving agent contained in the disperse aqueous phase released upon breakdown of the emulsion in order to remove the filter cake on the wall.

13. A well treatment method as claimed in claim 12, wherein the compatibility of the treatment fluid with the reservoir fluids is checked.

14. A well treatment method as claimed in claim 12 or 13, wherein the well is an injection well.

15. A well treatment method as claimed in claim 14, wherein the well is a water injection well.

16. A well treatment method as claimed in any one of claims 12 to 15, wherein the organosoluble additive is an organic formulation comprising at least one constituent selected from among the non-ionic or cationic surfactants of ethylene oxide and propylene oxide copolymers type, derivatives of alcohols or of phenols with alkoxylated or polyalkoxylated chain formations, polyalkylene glycols, polyamines, alkoxylated or polyalkoxylated amine derivatives, quaternary ammonium salts, quaternized alkanolamine esters and silicone derivatives, the non-ionic amphiphilic compositions obtained by reaction of at least one polymerized vegetable oil on at least one amino alcohol, and the fatty acid alkyl esters derived from natural, vegetable or animal oils, as well as any other fatty acid derivative, notably the polymerized unsaturated monocarboxylic fatty acids.

**17.** A well treatment method as claimed in any one of claims 12 to 16, wherein the solid-dissolving agent is selected from among the strong or weak acids, the mixtures of strong acids and chelating agents, and the specific barytine-dissolving agents, alone or in admixture.

**18.** An injection well treatment method as claimed in any one of claims 12 to 17, wherein the hydrosoluble additive allowing the retarded effect to be obtained is a weakly hydrolysable fatty acid ester.

**Figure 1**

**Figure 2**

**Figure 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5909774 A
- WO 2004027213 A
- WO 03054109 A
- US 2006223714 A
- EP 1190754 A1
- EP 1208898 A1
- FR 2811326